# EUROPEAN PATENT APPLICATION

(11) **EP 4 682 001 A1**
(43) Date of publication of application: **21.01.2026**
(21) Application number: 25187710.6
(22) Date of filing: 07.07.2025
(51) Int. Cl.: B60W 10/08, B60K 1/02, B60L 50/50, B60W 10/10, B60W 30/19

(54) **METHOD, APPARATUS, CONTROLLER, PROGRAM PRODUCT AND VEHICLE FOR CONTROLLING A DUAL-DRIVE AXLE**

(30) Priority: 17.07.2024 CN 202410963674
(71) Applicant: Robert Bosch GmbH, 70442 Stuttgart (DE)
(72) Inventor: JIA, Yunlong, Jiangsu, 214000 (CN); NI, Fanfan, Jiangsu, 214000 (CN)

(57) **Abstract**

The present disclosure relates to a method, an apparatus, a controller, a machine-readable program product and a vehicle for controlling a dual-drive axle, wherein the dual-drive axle comprises a first drive axle having a first drive motor and a first speed transmission system and a second drive axle having a second speed transmission system. The method comprises: in response to the speed of the first drive motor reaching a preset first target speed during the period when the first speed transmission system is in the second gear, controlling the second speed transmission system to switch from the first gear lower than the second gear to the second gear; and in response to the first drive motor reaching a torque that causes the first speed transmission system to switch from the second gear to the third gear, controlling the second speed transmission system to switch from the second gear to the first gear. This method reduces the in-gear time of the second drive axle, improving the vehicle's overall energy consumption. It also compensates for the torque reduction during the gear change of the first drive axle, eliminating the sensation of power interruption.

## Description

### Technical Field

The present disclosure relates to the field of vehicles, and more particularly to a method, an apparatus, a controller, a machine-readable program product, and a vehicle for controlling a dual-drive axle of a vehicle.

### Background

Single-axle drive vehicles use a multi-speed transmission without a clutch, synchronizer ring, or speed transmission controller. During gear shifting, power is interrupted, which is noticeable to the driver. In dual-axle drive vehicles, particularly electric heavy-duty vehicles on the current market, the gears of both the master and slave drive axles remain engaged. However, when only a single axle is driven, the other drive axle does not need to transmit torque. If this drive axle's gear remains engaged, drag torque will be generated. To overcome this drag torque, the vehicle must produce additional driving torque.

### Summary of the Invention

In a first aspect of the present disclosure, a method for controlling a dual-drive axle is provided, the dual-drive axle comprising a first drive axle having a first drive motor and a first speed transmission system, and a second drive axle having a second speed transmission system. The method comprises: in response to the speed of the first drive motor reaching a preset first target speed during the period when the first speed transmission system is in the second gear, controlling the second speed transmission system to switch from the first gear lower than the second gear to the second gear; and in response to the first drive motor reaching a torque that causes the first speed transmission system to switch from the second gear to the third gear higher than the second gear, controlling the second speed transmission system to switch from the second gear to the first gear.

In a second aspect of the present disclosure, an apparatus for controlling a dual-drive axle is provided, wherein the dual-drive axle comprises a first drive axle having a first drive motor and a first speed transmission system and a second drive axle having a second speed transmission system, and the apparatus comprises a second speed transmission system gear control unit, configured to: in response to the speed of the first drive motor reaching a preset first target speed during the period when the first speed transmission system is in the second gear, control the second speed transmission system to switch from the first gear lower than the second gear to the second gear; and in response to the first drive motor reaching a torque that causes the first speed transmission system to switch from the second gear to the third gear higher than the second gear, control the second speed transmission system to switch from the second gear to the first gear.

In a third aspect of the present disclosure, a controller is provided, comprising: at least one processor; and a memory, coupled to the at least one processor and having instructions stored thereon, wherein the instructions, when executed by the at least one processor, cause the controller to execute the method described in the first aspect of the present disclosure.

In a fourth aspect of the present disclosure, a vehicle is provided, comprising the controller according to the third aspect of the present disclosure.

In a fifth aspect of the present disclosure, a machine-readable storage medium is provided. The machine-readable storage medium has computer-executable instructions stored thereon, wherein the computer-executable instructions are executed by a processor to implement the method provided according to the first aspect of the present disclosure.

It will be understood that the content described in the Summary of the Invention is not intended to limit key or important features of the examples of the present disclosure, nor is it intended to limit the scope of the present disclosure. Other features of the present disclosure will become readily understood by the following description.

### Brief Description of the Drawings

Above and other features, advantages and aspects of various examples of the present disclosure will become more apparent in combination with the accompanying drawings and with reference to the following detailed description. In the accompanying drawings, like or similar accompanying drawings designate like or similar elements, wherein:
FIG. 1 is a schematic diagram of an example environment in which multiple examples of the present disclosure may be implemented;
FIG. 2 is a schematic diagram showing the change in speed and torque of the motor during the switch from a first gear position to another gear position of the first drive axle according to an example of the present disclosure;
FIG. 3 is a schematic diagram showing a flow chart of a method for controlling a dual-drive axle according to an example of the present disclosure;
FIG. 4 is a schematic diagram showing the change in gear position, motor speed and motor torque over time of the first drive axle and the second drive axle according to an example of the present disclosure;
FIG. 5 is a schematic diagram showing the pre-selected gear calculation logic according to an example of the present disclosure;
FIG. 6A is a block diagram showing an apparatus for controlling a dual-drive axle according to an example of the present disclosure;
FIG. 6B is another block diagram showing an apparatus for controlling a dual-drive axle according to an example of the present disclosure; and
FIG. 7 is a block diagram of an apparatus that can implement multiple examples of the present disclosure.

### Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It will be understood that the accompanying drawings and examples of the present disclosure are for exemplary purposes only and are not intended to limit the scope of protection of the present disclosure, and the examples of the present disclosure that are described below with reference to the accompanying drawings are for illustrative purposes only.

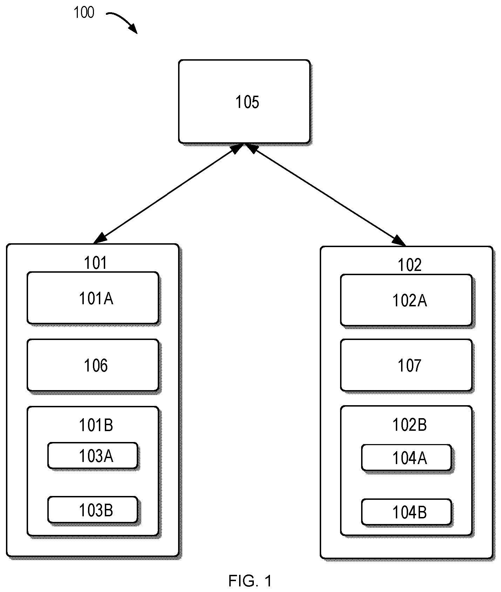

FIG. 1 shows a schematic diagram of an example environment 100 in which a plurality of examples of the present disclosure may be implemented. As shown in FIG. 1, a controller 105 can communicate with a first drive axle 101 and a second drive axle 102 and control the first drive axle 101 and the second drive axle 102. The dual-drive axle may further comprise a first output shaft 106 connected to the first drive axle 101 and a second output shaft 107 connected to the second drive axle 102, the output shafts 106 and 107 transmitting the power of the drive axles to the transmission system, and the speeds of the two drive shafts are the same. That is, the speed gradient is the same. Specifically, the first drive axle 101 may comprise a first drive motor 101A and a first speed transmission system 101B (e.g., a gearbox), and the first output shaft 106 is connected to the rotating shaft of the first drive motor 101A. The first speed transmission system 101B may also comprise a shift fork 103A and a shift fork drive motor 103B for controlling the movement of the shift fork. The second drive axle 102 may comprise a second drive motor 102A and a second speed transmission system 102B (e.g., a gearbox), and the second output shaft 107 is connected to the rotating shaft of the second drive motor 102A. The second speed transmission system 102B may also comprise a shift fork 104A and a shift fork drive motor 104B for controlling the movement of the shift fork. The speed and torque of the drive motor 101A and the drive motor 102A can be monitored by the controller 105 to calculate the speed gradient and torque changes of the two drive motors (i.e., the speed and torque changes of the motor shafts of the drive motors). The controller 105 can make some calculations based on the states (such as speed and torque) of the drive motors 101A and 102A, and issue some instructions based on the calculation results. The shift forks 103A and 104A can be closely connected to the transmission handle and located at its lower end, and their main function is to drive the middle transmission wheel. The shift fork drive motors 103B and 104B are used to drive the shift fork to shift, which may allow for different positioning of the middle transmission wheel, thereby adjusting the speed ratio of input and output. The speed of the shift fork drive motors 103B and 104B can also be monitored by the controller 105 to obtain the speed gradients of the shift fork drive motors.

As mentioned above, for electric vehicles with dual-axle drive, the gears of the master and slave drive axles will always be engaged. However, when the first drive axle of the two drive axles is required to operate, the second drive axle of the two drive axles does not need to transmit torque. If the gear of the second drive axle is always engaged (for example, in the first gear of the gearbox), drag torque will be produced. To overcome this drag torque, the drive motor of the first drive axle must generate additional torque, resulting in increased energy consumption and reduced overall efficiency of the vehicle. Therefore, it is necessary to dynamically calculate the gear of the second drive axle, and change the gear of the second drive axle at an appropriate time to reduce the in-gear time of the second drive axle, thereby improving the vehicle's overall energy consumption.

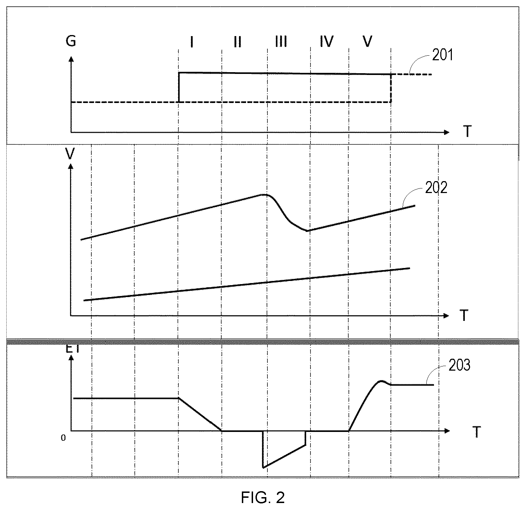

FIG. 2 is a schematic diagram showing the change in speed and torque of the motor during the switch from a first gear position to another gear position of the first drive axle according to an example of the present disclosure. As shown in FIG. 2, the first curve 201 represents a schematic diagram of gear change of the first speed transmission system 101B (wherein the vertical axis represents gear G and the horizontal axis represents time T), wherein the dashed line represents the change of the actual gear over time, and the solid line represents the change of the set target gear; the second curve 202 represents a schematic diagram of speed change of the first drive motor 101A of the first drive axle 101 (wherein the vertical axis represents speed V and the horizontal axis represents time T), and the third curve 303 represents a schematic diagram of torque change of the first drive motor 101A of the first drive axle 101 (wherein the vertical axis represents torque ET and the horizontal axis represents time T).

The speed transmission system of the first drive axle needs to go through five stages when changing from one gear to another. In the first stage, as shown in I, as shown by curve 203, the torque of the first drive motor of the first drive axle is reduced, and before the gear shift begins, the power output is reduced to prepare for the subsequent clutch separation and gear switching. The driver usually releases the accelerator pedal to reduce the output torque of the engine. In some advanced automatic transmission systems, the engine torque may be automatically adjusted by the electronic control unit (ECU) to achieve smoother gear shifting.

In the second stage, as shown in II, gear disengagement is performed. That is, the current gear is separated from the transmission system in preparation for engaging the new gear. The driver may step on the clutch pedal to cut off the power transmission between the engine and the gearbox. Simultaneously with the disengagement of the clutch, the shift mechanism (e.g., shift fork) within the gearbox begins to move, separating the current gear from the output shaft. During this stage, the clutch is fully disengaged, which may cause a slight increase in engine speed due to the reduction in load, while the vehicle continues to move forward because of inertia.

In the third stage, as shown in III, speed synchronization is performed. That is, the third stage: speed synchronization matches the speed of the new gear to be engaged with the output shaft to reduce the gear shift shock. During this stage, the synchronizer inside the gearbox starts to work, and the speed of the new gear gradually approaches the speed of the output shaft through friction. In some cases, it may be necessary to assist in completing speed synchronization by slightly adjusting the accelerator pedal, as shown by curve 202. When speed synchronization is completed, the speed of the new gear and the output shaft will be consistent.

In the fourth stage, as shown in IV, gear engagement is performed. That is, the new gear is firmly engaged with the output shaft to transmit power. The driver may continue to depress the clutch pedal while the shift mechanism (e.g., shift fork) inside the gearbox pushes the new gear into place. Once the new gear is fully engaged with the output shaft, power is transmitted to the wheels again through the gearbox.

In the fifth stage, as shown in V, torque recovery is performed, as shown by curve 203. That is, after the gear is engaged, the engine output torque is gradually restored so that the vehicle can move in the new gear. During this stage, the driver may gradually release the clutch pedal and adjust the accelerator pedal as needed to keep the vehicle speed stable or accelerate. The control system inside the gearbox will adjust the power output according to the vehicle speed, engine speed and the driver's intention. The engine torque is gradually restored and transmitted to the wheels, and the vehicle will continue to move in accordance with the new gear and power output characteristics.

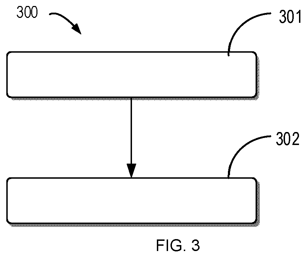

FIG. 3 is a schematic diagram showing a flow chart of a method for controlling a dual-drive axle according to an example of the present disclosure. In this method, the first drive axle 101 (e.g., a drive axle for transmitting torque for driving) is initially in the second gear (e.g., the 1st gear of the gearbox) and needs to be changed to the third gear (e.g., the 2nd gear of the gearbox), and the second drive axle 102 (e.g., a drive axle that is not required to transmit torque) is initially in the first gear (e.g., the neutral gear of the gearbox).

In block 301, in response to the speed of the first drive motor 101A reaching a preset first target speed n₁ (e.g., 5000 rpm) during the period when the first speed transmission system 101B is in the second gear, the second speed transmission system 102B is controlled to switch from the first gear lower than the second gear to the second gear.

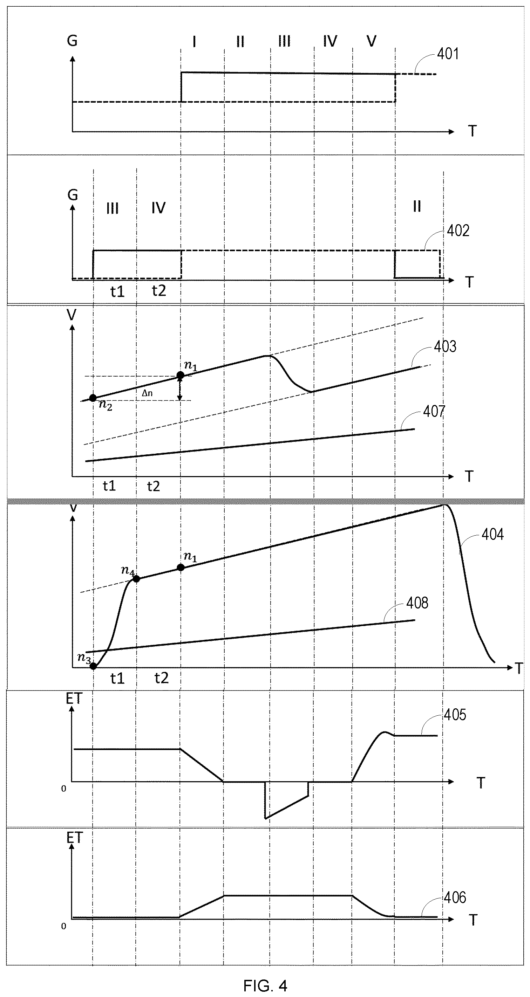

The following will describe the schematic diagram showing the change in gear position, motor speed and motor torque over time of the first drive axle and the second drive axle according to an example of the present disclosure with reference to FIG. 4. As shown in FIG. 4, the first curve 401 represents a schematic diagram of the gear position change of the first speed transmission system 101B (wherein the vertical axis represents the gear position G and the horizontal axis represents time T), wherein the dashed line represents the change of the actual gear position over time, and the solid line represents the change of the set target gear position; the second curve 402 represents a schematic diagram of the gear position change of the second speed transmission system 102B (wherein the vertical axis represents the gear position G and the horizontal axis represents time T), wherein the dashed line represents the change of the actual gear position over time, and the solid line represents the change of the set target gear position. As shown in FIG. 4, the third curve 403 represents a schematic diagram of the speed change of the first drive motor 101A of the first drive axle 101 (wherein the vertical axis represents the speed V and the horizontal axis represents time T), and the fourth curve 404 represents a schematic diagram of the speed change of the second drive motor 102A of the second drive axle 102 (wherein the vertical axis represents the speed V and the horizontal axis represents time T). As shown in FIG. 4, the fifth curve 405 represents a schematic diagram of the torque change of the first drive motor 101A of the first drive axle 101 (wherein the vertical axis represents torque ET and the horizontal axis represents time T), and the sixth curve 406 represents a schematic diagram of the torque change of the second drive motor 102A of the second drive axle 102 (wherein the vertical axis represents torque ET and the horizontal axis represents time T); the seventh curve 407 represents a schematic diagram of the speed change of the first output shaft 106 of the first drive axle 101 (wherein the vertical axis represents speed V and the horizontal axis represents time T); and the eighth curve 408 represents a schematic diagram of the speed change of the second output shaft 107 of the second drive axle 102 (wherein the vertical axis represents speed V and the horizontal axis represents time T), wherein the seventh curve 407 and the eighth curve 408 have substantially the same profile and slope.

In one example, when the vehicle is in the driving gear, the first drive axle 101 is in the first gear, and the second drive axle 102 (i.e., the non-drive axle) is in the neutral gear, the driver gradually increases the vehicle speed at, for example, a 50% accelerator pedal opening. During this period, the vehicle controller 105 continuously calculates the speed and torque of the drive motors (e.g., the first drive motor 101A and the second drive motor 102A), the actual position of the shift fork (e.g., the shift fork 104B of the second speed transmission system 102B) and the state of the shift fork drive motor (e.g., the shift fork drive motor 104B of the second speed transmission system 102B), and the speeds and gradients of the first and second output shafts of the dual-drive axle, thereby obtaining the above-mentioned curve.

As shown in FIG. 4, preferably, as shown by curve 403, at the start of stage I, the speed of the first drive motor 101A reaches a preset first target speed n₁ (e.g., 5000 rpm), at which time, as shown by curve 405, the torque of the first drive motor 101A begins to decrease. As shown by curve 402, since the second speed transmission system 102B is preferably switched to the second gear (e.g., the first gear of the gearbox) at the start of stage I instead of being maintained at the lower first gear (e.g., neutral), during the period from stage I to stage V, the second drive motor 102A of the second drive axle 102 may provide torque to the dual-drive axle to compensate for the torque reduction of the first drive motor 101A of the first drive axle 101, so that the driver does not feel power interruption.

As shown by curve 406, the torque of the second drive motor 102A gradually increases in stage I, and remains unchanged during stage II to stage IV. As shown by curve 405, the torque of the first drive motor 101A gradually decreases in stage I, and remains zero or negative torque during stage II to stage IV so as not to provide torque to the dual-drive axle, and the second drive motor 102A instead provides torque to the dual-drive axle to compensate for the torque reduction of the first drive axle.

Returning to reference FIG. 3, in block 302, in response to the first drive motor 101A reaching a torque that causes the first speed transmission system 101B to switch from the second gear to the third gear (for example, from the 1st gear to the 2nd gear), the second speed transmission system 102B is controlled to switch from the second gear to the first gear, for example, from the 1st gear to the neutral gear.

Referring to FIG. 4, as shown by curve 405 , the torque of the first drive motor 101A gradually increases to the torque corresponding to the 2nd gear in stage V and the gear engagement is also achieved, so that the first speed transmission system 101B can be replaced with a higher gear (e.g., 2nd gear) at the end of stage V. As shown by curve 401, the first speed transmission system 101B is switched from 1st gear to 2nd gear at the end of stage V.

As shown by curve 406, the torque of the second drive motor 102A gradually decreases to zero in stage V, thereby enabling the second speed transmission system 102B to be switched from 1st gear to neutral gear. As shown by curve 402, at a certain time after the end of stage V, the second speed transmission system 102B is switched from 1st gear to neutral gear. Preferably, at the end of stage V, the target gear of the second speed transmission system 102B is set to neutral gear, and within a period of time after the end of stage V (the period of time corresponds to the gear disengagement in stage II), the first speed transmission system 101B is in 2nd gear during the period of time, and the second speed transmission system 102B is switched from 1st gear to neutral gear as the above-mentioned target gear after the gear disengagement corresponding to stage II is achieved.

By switching the second speed transmission system 102B from the first gear to the neutral gear at an appropriate time, for example, when the second speed transmission system 102B realizes gear disengagement after the first speed transmission system 101B switches from the first gear to the second gear, the in-gear time of the second drive axle 102 can be reduced. For example, the in-gear time is only a short period of time from stage I to stage V and thereafter when the gear is disengaged, and it will not be engaged all the time. Therefore, in stage I to stage V, the second drive axle 102 provides driving force to compensate for the torque reduction of the first drive axle 101 in these stages. However, during the periods outside of stage I to stage V, the second drive axle 102 basically remains engaged. As a result, in these intervals, the second drive axle 102 does not generate drag torque, and the first drive axle 101 does not need to produce additional driving torque to counteract it. Consequently, the overall energy consumption of the vehicle remains stable, resulting in higher driving efficiency.

In order to enable the second speed transmission system 102B of the second drive axle 102 to be switched from neutral to first gear when the speed of the first drive motor 101A reaches the preset first target speed, it is necessary to set the target gear of the second speed transmission system 102B to first gear before the start time of stage I. Thus, in the case of a known target gear, after experiencing speed synchronization (related to the above-mentioned stage III, i.e., time t1 as shown in FIG. 4) and gear engagement (related to the above-mentioned stage IV, i.e., time t2 as shown in FIG. 4), the second speed transmission system 102B can be switched to first gear as the target gear when the speed of the first drive motor 101A reaches the preset first target speed (the speed of the second drive motor 102A also reaches the preset first target speed synchronously) to compensate for the torque reduction of the first drive motor 101A of the first drive axle, so that the driver will not feel power interruption.

To achieve this purpose, firstly, based on a preset first target speed n₁ (e.g., 5000 rpm), a second target speed n₂ of the first drive motor 101A, which is lower than the first target speed, is calculated. In response to the speed of the first drive motor 101A reaching the second target speed n₂, the target gear position of the second speed transmission system 102B, which is currently in neutral, is set to first gear. Then, in response to the speed of the first drive motor 101A reaching the first target speed n₁, the second speed transmission system 102B, which is currently in neutral, is switched to first gear as the target gear position.

The following will specifically describe how to calculate the second target speed n₂ based on the preset first target speed n₁ with reference to FIG. 4. Curve 407 of FIG. 4 shows a schematic diagram of the change in the speed of the first output shaft 106 of the first drive axle 101 over time. The speed gradient of the first output shaft 106 of the first dual-drive axle 101, that is, the slope of curve 407, may be obtained by monitoring the change in the speed of the first output shaft 106 of the first drive axle 101 over time. For example, the speed gradient curve 407 of the first output shaft 106 may be obtained by monitoring the output shaft speed sensor. In the time before stage I, as shown by curve 405, the torque of the first drive motor 101A is a constant value, and the speed gradient of the first drive motor 101A shown in curve 403 and the speed gradient of the first output shaft 106 of the first drive axle shown in curve 407 are proportional to each other, that is, related to the transmission ratio. The speed gradient of the first drive motor 101A may also be derived by monitoring the speed gradient of the first output shaft 106 of the first dual-drive axle 101, and the output shaft of the drive axle is therefore more easily monitored due to its physical structure and actual arrangement position.

Since the first target speed n₁ is a preset speed, the second target speed n₂ may be inverted when the time span between the first target speed n₁ and the second target speed n₂ (i.e., the sum of time t1 and time t2) and the gradient of the curve 405 within time t1 and t2 (the gradient may be obtained by the speed gradient of the first output shaft 106 of the first drive axle 101 and the transmission ratio) are known. Therefore, in order to derive the second target speed n₂, the time values of time t1 and time t2 also need to be known.

In one example, the time t2 may be obtained by monitoring the shift fork drive motor of the second speed transmission system 102B. The time taken by the shift fork drive motor to move the shift fork stroke of the second speed transmission system 102B from a neutral position (e.g., 0 mm) to a gear position (e.g., the 1st gear position, e.g., 8 mm) may be calculated as t2.

In one example, the speed n₄ (e.g., 3000 rpm) may be inverted from the first target speed n₁. For example, the speed n₄ may be inverted from the time t2 and the derived speed gradient of the second drive motor 102A. The speed gradient of the second output shaft 107 may be obtained by monitoring the speed gradient of the second output shaft 107 of the second drive axle 102 (that is, the slope of the curve 408), because at the time t2 stage, there is a certain transmission ratio between the motor shaft of the second drive motor 102A and the second output shaft 107 due to the gear engagement (the transmission ratio is also related to the current gear). Therefore, the speed gradient of the second drive motor 102A (that is, the slope of the speed curve 404 during the time t2) may be derived from the speed gradient and transmission ratio of the second output shaft 107. Therefore, when the first target speed n₁ and the time t2 are known, the speed n₄ may be calculated based on the speed gradient of the second output shaft 107 of the second drive axle 102 and transmission ratio.

In order to obtain time t1, the speed of the second drive motor 102A of the second drive axle 102 may be controlled so that in this stage, the speed of the second drive motor 102A increases from n₃ (for example, 0 rpm) to n₄ (for example, 3000 rpm), and the time for the drive motor 102A to increase from the speed 0 to the speed n₄ is recorded as time t1.

Therefore, in the examples of the present disclosure, the time t1 and t2 may be calculated by the preset first target speed n₁, the derived speed gradient of the second drive motor and the speed gradient of the shift fork drive motor. Further, based on the time t1 and t2 and the derived speed gradient of the first drive motor 101A (or the speed gradient of the first output shaft 106 and transmission ratio), the second target speed n₂ may be calculated.

In the examples according to the present disclosure, the speed and torque of the drive motor (e.g., the first and second drive motors), the current gear of the drive axle (the first and second drive axles), the position of the shift fork (e.g., the shift fork of the second drive axle), the speed of the shift fork drive motor (e.g., the shift fork drive motor of the second drive axle), and the speed and gradient of the output shaft (e.g., the first output shaft and the second output shaft of the dual-drive axle) are comprehensively considered to optimize the pre-selected gear (target gear) calculation logic of the non-drive axle (i.e., the second drive axle), reduce the in-gear time of the non-drive axle, and reflect better vehicle economy. In other words, the pre-selected gear algorithm provided in the present application may dynamically adjust the in-gear time of the non-drive axle according to the current speed of the drive motors 101A and 102A and the speed of the first and second output shafts 106 and 107.

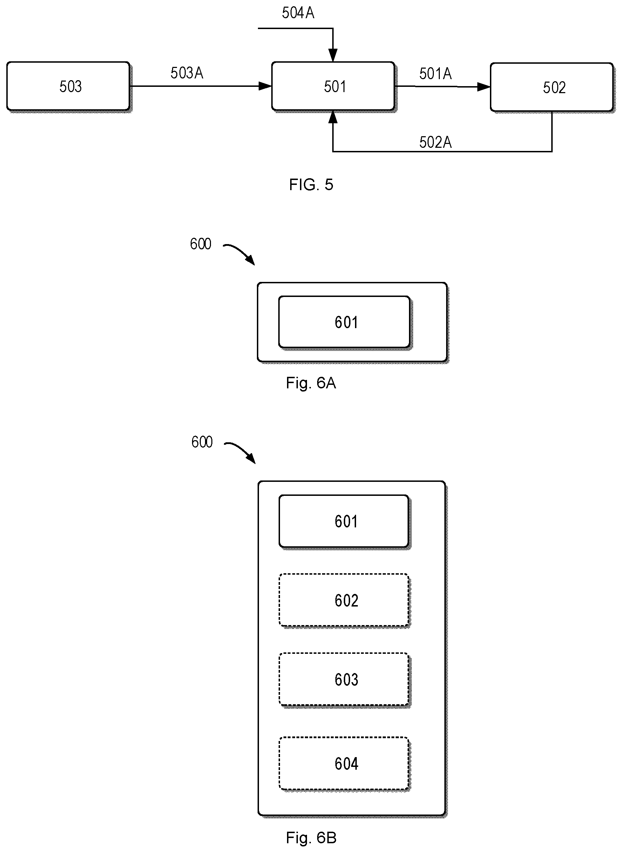

FIG. 5 is a schematic diagram showing the pre-selected gear calculation logic according to an example of the present disclosure. The pre-selected gear calculation logic circuit 501 may retrieve information 502A of the current gear (e.g., the current gear of the second speed transmission system) from the gearbox 502. It can also obtain the target speed 503A (e.g., the first target speed) from the speed map 503, as well as information 504A about the dynamic speed (e.g., the difference between the second target speed and the first target speed). When the above information is obtained, the pre-selected gear calculation logic circuit 501 may send the calculated target gear 501A to the gearbox 502 at an appropriate time.

For example, by considering the acceleration pedal, the vehicle mass and the road slope, the speed map 503 may be obtained, thereby obtaining the first target speed 503A. For example, by comprehensively considering various influencing factors such as the speed and torque of the drive motor (e.g., the first drive motor and the second drive motor), the current gear of the drive axle (e.g., the second drive axle), the position or stroke of the shift fork (e.g., the shift fork of the second drive axle), the speed of the shift fork drive motor (e.g., the shift fork drive motor of the second drive axle), and the speed and gradient of the output shaft (e.g., the first output shaft and the second output shaft of the dual-drive axle), information about the dynamic speed (e.g., the difference between the second target speed and the first target speed) may be obtained.

In some examples of the present disclosure, the speed gradients of the drive motors and the shift fork drive motors may be controlled to achieve varying speed gradients and time intervals. This allows for the attainment of different dynamic speeds and target speed differences. As long as the first drive motor reaches the second target speed (i.e., the calculated dynamic speed) calculated under the control condition, the controller sends a target gear command to the second speed transmission system. Subsequently, for example, when the preset first target speed is reached, the second speed transmission system may switch from the current gear to the target gear to compensate for the torque drop of the first drive axle.

Part of the input parameters are received from the controller area network message of the vehicle controller, and the other part comes from the sensor. These parameters play a key role in the calculation of the dual-axle gear position, and are ultimately converted into the control of the dual-axle target gear position by the gearbox controller.

In some examples, the vehicle is in the driving gear, the first drive axle 101 (i.e., the master drive axle) is in the first gear, and the second drive axle 102 (i.e., the non-drive axle) is in the neutral gear. The driver gradually increases the vehicle speed at a 50% accelerator pedal opening. The vehicle controller 105 (e.g., the gearbox control unit) constantly calculates the speeds and torques of the first and second drive motors 101A and 102A, the actual position of the shift fork 104A of the second drive axle 102 and the state of the shift fork drive motor 104B of the second drive axle, and the speeds and gradients of the first and second output shafts 106 and 107 of the dual-drive axle. By controlling the speed gradient of the second drive motor 102A (of the non-drive axle), the time t1 when the speed of the second drive motor 102A of the second drive axle increases from n₃ to n₄ may be calculated.

In addition, by controlling the speed and gradient of the shift fork drive motor 104B (e.g., a brushless DC [BLDC] motor), the time t2 when the shift fork 104A of the second drive axle 102 moves from the neutral position (e.g., 0 mm) to the gear position (e.g., 8 mm) may be calculated. The speed n₄ may be inverted based on the time t2, the speed gradient, and the first target speed, thereby obtaining the time t1.

However, based on the time t = t1 + t2 obtained from the above calculation, the speed difference Δn between the dynamic shift wire compensation values speeds n1 and n2 of the pre-selected gears may be calculated to be equal to = (t1 + t2) * the speed gradient of the first output shaft 106 of the first drive axle * the transmission ratio (i.e., the transmission ratio between the motor shaft of the first drive motor and the output shaft of the first drive axle).

Finally, the shift speed of the pre-selected gear (ie, the second target speed n₂) may be calculated = the first target speed (n₁) - the speed difference Δn.

When the speed of the drive motor 101A of the first drive axle 101 reaches the pre-selected gear shift wire speed n₂, the target gear of the second drive axle 102 becomes the 1st gear. First, the speed of the drive motor 102A of the second drive axle 102 (changes to the speed mode control state, at this time the torque suddenly changes) is adjusted from the speed n₃ to the speed n₄, and then the shift fork 104A of the second drive axle 102 performs the gear shifting action, and the current gear switches from neutral to 1st gear. After the gear shifting is completed, the speeds of the first and second drive motors 101A and 102A both become n₁. When the speed of the drive motor 101A of the first drive axle 101 reaches n₁, the target gear of the first drive axle 101 will become the 2nd gear, and the 1-to-2 gear shifting action will be performed. During the gear shifting process (i.e., stage I to stage V), the second drive axle 102 will take over the torque to ensure that the vehicle has no power interruption. However, after the first drive axle 101 completes the gear shifting (i.e., after stage V), the second drive axle 102 will consider disengaging the gear based on economic efficiency to reduce the in-gear time.

FIG. 6A is a block diagram showing an apparatus 600 for controlling a dual-drive axle according to an example of the present disclosure. As shown in FIG. 6A, the apparatus 600 comprises a second speed transmission system gear control unit 601, which is configured to control the second speed transmission system to switch from the first gear lower than the second gear to the second gear in response to the speed of the first drive motor reaching a preset first target speed during the period when the first speed transmission system is in the second gear; a second gear control unit, which is configured to control the second transmission speed system to switch from the second gear to the first gear in response to the first drive motor reaching a torque that causes the first speed transmission system to switch from the second gear to the third gear higher than the second gear.

FIG. 6B is another block diagram showing an apparatus 600 for controlling a dual-drive axle according to an example of the present disclosure. As shown in FIG. 6B, the apparatus 600 may further comprise a first speed transmission system control unit 602, which is configured to control the first speed transmission system to switch from the second gear to the third gear in response to the first drive motor reaching a torque that causes the first speed transmission system to switch from the second gear to the third gear higher than the second gear.

As shown in FIG. 6B, the apparatus 600 may further comprise a target speed determination unit 603, which is configured to based on a preset first target speed determine a second target speed lower than the first target speed. In this case, the above description may also be implemented as part of the function of a second speed transmission control unit 601. The second target speed is related to the speed of the drive motor, the current gear position, the position of the shift fork, the speed of the shift fork drive motor, and the speed and gradient of the output shaft of the drive axle. Based on these parameters, the calculation logic of the pre-selected gear (target gear) of the non-drive axle (i.e., the second drive axle) can be optimized to reduce the in-gear time of the non-drive axle.

As shown in FIG. 6B, the apparatus 600 may further comprise a target gear setting unit 604, which is configured to set the target gear of the second speed transmission system 102B currently in the first gear to the second gear higher than the first gear in response to the speed of the first drive motor 101A reaching the second target speed (e.g., speed n₂), so that after experiencing speed synchronization (i.e., time t1 as shown in FIG. 4) and gear engagement (i.e., time t2 as shown in FIG. 4), the second speed transmission system 102B can be switched to the first gear as the target gear when the speed of the first drive motor 101A reaches the preset first target speed (n₁ as shown in FIG. 4) to compensate for the torque reduction of the first drive motor 101A of the first drive axle, ensuring that the driver does not experience power interruption. In this case, the above description may also be implemented as part of the function of the second speed transmission control unit 601.

The target gear setting unit 604 also sets the target gear of the first speed transmission system 101B, which is currently in the second gear, to the third gear in response to the speed of the first drive motor 101A reaching the first target speed (for example, speed n₁), so that after undergoing stage I to stage V as shown in FIG. 4, the first speed transmission system 101B can be switched to the third gear. In this case, the above description may also be implemented as part of the function of the first speed transmission control unit 602.

The target gear setting unit 604 also sets the target gear of the second speed transmission system 102B currently in the second gear to the first gear in response to the first drive motor 101A reaching a torque that causes the first speed transmission system 101B to switch from the second gear to the third gear (i.e., at the end of stage V), thereby reducing the in-gear time of the second drive axle 102. In this case, the above description may also be implemented as a part of the function of the second speed transmission control unit 601.

It should be understood that by utilizing the apparatus 600 of the present disclosure, at least one of a number of advantages that are capable of being implemented by the method or process as described above can be implemented. For example, the apparatus 600 can reduce the in-gear time of the non-drive axle to reduce energy consumption. Moreover, the apparatus 600 can also compensate for the torque reduction of the master drive axle, so that the driver does not feel power interruption.

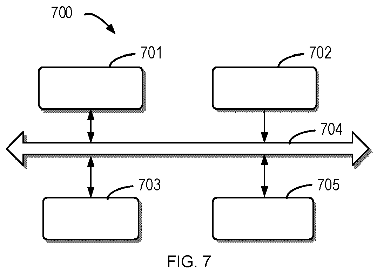

FIG. 7 is a block diagram of a controller 700 that may implement multiple examples of the present disclosure. The controller 700 may be, for example, the vehicle controller 105 (e.g., a gearbox controller) as shown in FIG. 1. As shown in the figure, the controller 700 comprises a computing unit 701, which may perform various appropriate actions and processes according to computer program instructions stored in a read-only memory (ROM) 702 and loaded into a random-access memory (RAM) 703. Various programs and data required for the operation of the controller 700 may also be stored in the RAM 703. The computing unit 701, ROM 702, and RAM 703 are interconnected via a bus 704. An input/output (I/O) interface 705 is also connected to the bus 704.

The computing unit 701 can be various general-purpose and/or special-purpose processing components with processing and computing capabilities. Examples of the computing unit 701 include, but are not limited to, central processing units (CPU), graphics processing units (GPU), various dedicated artificial intelligence (AI) computing chips, various computing units running machine learning model algorithms, digital signal processors (DSP), and any appropriate processors, controllers, microcontrollers, etc. The computing unit 701 executes the various methods and processes described above, such as method 300. For example, in some examples, the method 300 can be implemented as a computer software program tangibly contained in a machine-readable medium. In some examples, part or all of the computer programs may be loaded and/or installed onto the controller 700 through the ROM 702. When the computer program is loaded into the RAM 703 and executed by the computing unit 701, one or more steps of the method 300 described above can be performed. Alternatively, in other examples, the computing unit 701 can be configured to perform method 300 by any other suitable means (e.g., by means of firmware).

The functions described above herein can be performed, at least in part, by one or more hardware logic components. For example, and without limitation, exemplary types of hardware logic components that can be used comprise: Field Programmable Gate Arrays (FPGA), Application Specific Integrated Circuits (ASIC), Application Specific Standard Products (ASSP), System on a Chip (SOC), Complex Programmable Logic Devices (CPLD), and the like.

The program code for implementing the methods of the present disclosure can be written in any combination of one or more programming languages. This program code can be provided to a processor or controller of a general-purpose computer, special-purpose computer, or other programmable data processing apparatuses such that the program code, when executed by the processor or controller, causes the functions/operations specified in the flowcharts and/or block diagrams to be implemented. The program code can be executed entirely on the machine, partly on the machine, as a stand-alone software package partly on the machine and partly on a remote machine, or entirely on a remote machine or server.

In the context of the present disclosure, a machine-readable medium can be a tangible medium that can contain or store programs for use by or in conjunction with an instruction execution system, apparatus, or device. A machine-readable medium can be a machine-readable signal medium or a machine-readable storage medium. The machine-readable medium can comprise, but is not limited to, electronic, magnetic, optical, electromagnetic, infrared, or semiconductor systems, apparatuses, or devices, or any suitable combination of the foregoing. More specific examples of the machine-readable storage medium would comprise electrical connections based on one or more wires, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing. Furthermore, although operations have been depicted in a specific order, it should be understood that such operations are not required to be performed in the specific order shown or in sequential order, nor are all illustrated operations required to be performed to achieve the desired results. In certain contexts, multitasking and parallel processing may be advantageous. Similarly, although several specific implementation details are included in the above discussion, these should not be construed as limiting the scope of the present disclosure. Certain features described in the context of separate examples can also be implemented in combination in a single implementation. Conversely, various features described in the context of a single implementation can also be implemented separately or in any suitable sub-combination in multiple implementations.

Although the subject matter has been described in language specific to structural features and/or methodological acts, it is to be understood that the subject matter defined in the appended claims is not necessarily limited to the specific features or acts described above. Rather, the specific features and operations described above are merely exemplary forms of implementing the claims.

## Claims

1. A method (300) for controlling a dual-drive axle, the dual-drive axle comprising a first drive axle (101) having a first drive motor (101A) and a first speed transmission system (101B), and a second drive axle (102) having a second speed transmission system (102B), the method comprising:
in response to the speed of the first drive motor (101A) reaching a preset first target speed (n₁) during the period when the first speed transmission system (101B) is in the second gear, controlling (301) the second speed transmission system (102B) to switch from the first gear lower than the second gear to the second gear; and
in response to the first drive motor (101A) reaching a torque that causes the first speed transmission system (101B) to switch from the second gear to the third gear higher than the second gear, controlling (302) the second speed transmission system (102B) to switch from the second gear to the first gear.

2. The method according to claim 1, wherein in response to the speed of the first drive motor (101A) reaching a preset first target speed (n₁) during the period when the first speed transmission system (101B) is in the second gear, controlling (301) the second speed transmission system (102B) to switch from the first gear lower than the second gear to the second gear comprises:
based on the preset first target speed (n₁), determining a second target speed (n₂) of the first drive motor (101A) lower than the first target speed;
in response to the speed of the first drive motor (101A) reaching the second target speed (n₂), setting the target gear of the second speed transmission system (102B) currently in the first gear to be higher than the second gear; and
based on the target gear and in response to the speed of the first drive motor (101A) reaching the first target speed (n₁), controlling the second speed transmission system (102B) to switch from the first gear to the second gear as the target gear.

3. The method according to claim 1, wherein in response to the first drive motor (101A) reaching a torque that causes the first speed transmission system (101B) to switch from the second gear to the third gear higher than the second gear, controlling (302) the second speed transmission system (102B) to switch from the second gear to the first gear comprises:
in response to the first speed transmission system (101B) switching from the second gear to the third gear, setting the target gear of the second speed transmission system (102B) currently in the second gear to the first gear; and
based on the target gear and in response to the second speed transmission system (102B) completing gear disengagement, controlling the second speed transmission system (102B) to switch from the second gear to the first gear which serves as the target gear.

4. The method according to claim 2, wherein the first drive axle further comprises a first output shaft (106),
wherein based on the preset first target speed (n₁) determining the second target speed (n₂) of the first drive motor lower than the first target speed comprises:
determining a first speed gradient of the first output shaft (106);
determining the amount of time (t1 + t2) required for the speed of the first drive motor (101A) to increase from the second target speed (n₂) to the first target speed (n₁);
determining a difference (Δn) between the first target speed and the second target speed based on the first speed gradient, the amount of time (t1 + t2), and the transmission ratio between the first drive motor (101A) and the first output shaft (106); and
determining the second target speed (n₂) based on the difference (Δn) and the first target speed (n₁).

5. The method according to claim 4, wherein determining the first speed gradient of the first output shaft (106) comprises:
obtaining a speed curve of the first output shaft (106) that changes over time; and
determining the first speed gradient of the first output shaft (106) based on the speed curve.

6. The method according to claim 4, wherein the second drive axle further comprises a second drive motor (102A), a shift fork (104A) and a shift fork drive motor (104B) for driving the shift fork, wherein determining the amount of time required for the speed of the first drive motor to increase from the second target speed to the first target speed comprises:
determining a second speed gradient of the shift fork drive motor (104B);
determining a third speed gradient of the second drive motor (102A); and
determining the amount of time (t1 + t2) based on the first target speed, the second speed gradient, and the third speed gradient.

7. The method according to claim 6, wherein determining the amount of time based on the first target speed, the second speed gradient, and the third speed gradient comprises:
based on the second speed gradient, determining a first time component (t2) required for the shift fork (104A) to cause the second speed transmission system to switch from the first gear to the second gear;
based on the third speed gradient and the first time component (t2), determining an intermediate specific speed (n₄); and
controlling the speed of the second drive motor (102A) to increase from the speed (n₃) corresponding to the first gear to the intermediate specific speed (n₄), and recording the elapsed time as a second time component (t1),
wherein the amount of time is equal to the sum of the first time component (t2) and the second time component (t1).

8. The method according to claim 7, wherein determining the second speed gradient of the shift fork drive motor (104B) comprises:
obtaining a speed curve of the shift fork drive motor (104B) that changes over time; and
determining the second speed gradient based on the acquired speed curve of the shift fork drive motor (104B) that changes over time.

9. The method according to claim 7, wherein the second drive axle (102) further comprises a second output shaft (107), and determining the third speed gradient of the second drive motor (102A) comprises:
obtaining a speed curve of the second output shaft (107) that changes over time; and
determining the third speed gradient based on the acquired speed curve of the second output shaft (107) that changes over time and the transmission ratio between the second drive motor (102A) and the second output shaft (107).

10. The method according to any one of claims 1 to 9, wherein the first gear is neutral, and the second gear and the third gear are non-neutral.

11. An apparatus for controlling a dual-drive axle, the dual-drive axle comprising a first drive axle (101) having a first drive motor (101A) and a first speed transmission system (101B), and a second drive axle (102) having a second speed transmission system (102B), the apparatus comprising:
a second speed transmission system gear control unit (601), configured to:
in response to the speed of the first drive motor (101A) reaching a preset first target speed (n₁) during the period when the first speed transmission system (101B) is in the second gear, control (301) the second speed transmission system (102B) to switch from the first gear lower than the second gear to the second gear; and
in response to the first drive motor (101A) reaching a torque that causes the first speed transmission system (101B) to switch from the second gear to the third gear higher than the second gear, control (302) the second speed transmission system (102B) to switch from the second gear to the first gear.

12. A controller, comprising:
at least one processor, and
a memory, coupled to the at least one processor, and having instructions stored thereon that, when executed by the at least one processor, cause the controller to perform the method according to any one of claims 1-10.

13. A vehicle, comprising the controller according to claim 12.

14. A machine-readable program product, the machine-readable program product being tangibly stored on a non-volatile machine-readable medium and comprising machine-executable instructions that, when executed, cause a machine to perform the method according to any one of claims 1-10.
